# EUROPEAN PATENT APPLICATION

(11) **EP 4 464 163 A1**
(43) Date of publication of application: **20.11.2024**
(21) Application number: 23173670.3
(22) Date of filing: 16.05.2023
(51) Int. Cl.: A23C 7/04, A23C 9/142, A23C 9/15, A23C 19/05, A23C 19/068

(54) **A METHOD FOR MANUFACTURING SEMI-HARD CHEESE**

(71) Applicant: DMK Deutsches Milchkontor GmbH, 27404 Zeven (DE)
(72) Inventor: Van der Velde, Henk, 27404 Zeven (DE); Wittermans, Folkert, 27404 Zeven (DE); Akkerman, Jan Coen, 27404 Zeven (DE)
(74) Representative: Fabry, Bernd

(57) **Abstract**

A process for manufacturing semi-hard cheese, wherein skimmed milk enriched in fat and proteins, but depleted in lactose is subjected to coagulation without the need for pre-drainage of whey and any washing operations.

## Description

### AREA OF INVENTION

The present invention refers to the area of dairy products and concerns an improved process for manufacturing semi-hard cheese without pre-drainage of whey and washing operations.

### BACKGROUND OF THE INVENTION

The process of semi hard cheese making has improved substantially on hygiene and scale of operation over the last 100 years. However, the basic process resembles medieval times; adding vast quantities of water during the process and applying a cumbersome whey removal in the cheese vat.

As set out in the Dairy Processing Handbook, Tetra Pak, pages 287-320 (1995**)** the current industrial manufacture of semi hard cheese types comprises of the following steps:
- The raw milk is after reception usually given a mild heat treatment to inactivate most of the vegetative bacteria and is standardized at a certain fat/protein ratio. This is accomplished by removing fat using a centrifuge and returning it to the cheese milk in the desired fat protein ratio. In this manner the fat content of the final cheese can be controlled. In addition, modern lines often also contain measures to mechanically reduce the number of thermoresistant bacteria spores in the final cheese milk, e.g., bactofugation or microfiltration.
- A mild pasteurization of the milk preferably just before being piped into the cheese vat combined with bringing the milk at the appropriate clotting temperature, ~ 30°C.
- Addition of a coagulant, i.e., calf rennet or another proteinase, and starter culture(s) to the milk in the cheese vat. Also, CaCl₂ is usually added to enhance coagulation. In addition, colorants and/or preservatives may be added.
- Clotting of the lukewarm cheese milk due to the activity of the rennet.
- Cutting the formed gel in order to induce a process called syneresis; contraction of the protein network leading to expulsion of whey. In this manner, curd grains and whey are being formed.
- Pre-drainage of whey in the cheese vats is common practice for Gouda, Maasdam and Edam cheese. It may also be applied to other cheese types, e.g., Emmental. In this process, a substantial part of the whey is removed in the cheese vat. The step is applied considerable time after the start of the cutting of the gel to ensure enough whey has been expelled from the curd grains, but before heating (or sometimes cooling) of the curd/whey mixture takes place.
- Addition of washing water to reduce the lactose percentage in the curd grains, the use of hot water enhances syneresis. The dilution of the whey surrounding the curd grains causes diffusion of a part of the lactose out the curd grains.
- Final separation of the curd grains and the whey in a strainer.
- The separated curd is put in a cheese mould.
- The cheese moulds are positioned under a pressing system to form a coherent mass and expel additional moisture.
- The unloading of the cheese mould releases the cheeses; these are subsequently submerged into a brine bath to salt the cheeses and to dehydrate the outer layer to form a crust. The cold brine also cools the cheeses, which stops the syneresis.

For example, a typical raw milk intended for the manufacture of Gouda cheese contains 3.4 wt.-percent far, 3.3 wt.-percent proteins, about 4.7 wt.-percent lactose and a total amount of solids of about 12.5 wt.-percent.

### RELEVANT PRIOR ART

EP 0977488 B1 (CAMPINA) discloses a method for the production of cheese of the half hard type from milk, at least comprising the steps of: coagulating the milk; cutting the curd obtained; separating off the whey; pressing the curd in the mould; treating the thus obtained cheese with brine, whereby milk with a reduced lactose content is used. Also cheese of the half hard type is described, which is produced by using milk with a reduced lactose content, which cheese preferably has a moisture content of less than 50 percent by weight. The use of lactose standardized milk can reduce the number of the steps needed by omitting the use of washing water [2].

### OBJECT OF THE INVENTION

The standard procedure as explained above, however, still shows serious disadvantages, as for example:
- Contamination risks: The whey sieve remains a potential risk for contamination with bacteriophages and/or bacteria, as it is difficult to clean.
- Formation of lumps: Prior to the start and during the whey removal, stirring is stopped, causing the curd grains to settle on top of each other. The curd grains start to fuse with each other, forming lumps. These lumps have to be broken up prior to the washing phase in order to efficiently reduce the lactose content in the curd grains. Remaining lumps may cause quality issues in the final cheeses. In addition, some lumps may get stuck in the knife frames, which have to be removed manually by aiming a powerful water jet on them when the cheese vat is being emptied.

- Cheese yield reduction: To break up the lumps formed, the cutting knives in the cheese vat will be used. This will, however, lead to fracture of some of the curd grains, which in turn induces curd fines and fat losses, thus reducing cheese yield.
- Process time deviation: The whey removal itself, its preceding settling and the hoisting of the whey sieve and its manual cleaning all take time. Moreover, it is a tricky operation as the applied high-capacity centrifugal pumps are non-priming. Hereto, a so-called interceptor is mounted: a vessel full of liquid on the suction side of the pump to overcome the initial air present in the line between the whey sieve and the pump. The whey sieve is lowered in small steps; lowering too slowly will cause air suction and slow down and/or stop the suction by the whey pump, lowering too fast will cause more curd grains ending up in the whey sieve. This delicate operation is one of the major causes of delays in the cheese making process.
- Major process risk: Accidental breakage of the hoist line of the whey sieve can disrupt production and cause serious damage to the cheese vat. Preventive maintenance of this component is essential.
- Cheese composition variation: The whey removal in the cheese vat causes variation in composition of the final cheese; due to the variation in fat content as result of the variation in fat losses during the breaking of the lumps. The formed curd fines may also hamper the drainage process during the straining phase, which may increase the deviation in the moisture content of the final cheese.
- Need for large whey buffer tanks: whereas the whey released by a continuous strainer is practically constant over time, the whey from the cheese vats is coming in large spikes. This requires a substantial buffer tank capacity as the downstream whey processing normally runs at a fixed rate.
- Heat recuperation from whey: the whey is usually cooled (in)directly using cold cheese milk on its way to the pasteurizer. The heat exchange is hampered by the different temperatures.

Therefore, it has been the object of the present invention to overcome the disadvantages explained above and to provide the highly appreciated cheese quality using a robust industrial process that particularly does not apply whey removal nor washing water in the cheese vat.

### BRIEF DESCRIPTION OF THE INVENTION

A first object of the present invention refers to process for manufacturing a semi-hard cheese, for example but not limited to, of the Gouda, Maasdam or Edam type, consisting of or encompassing the following steps:
(a) providing a raw milk;
(b) subjecting said raw milk to a separation process for obtaining a skim milk fraction (SM) and a cream fraction (C);
(c) subjecting the skim milk of step (b) to an ultrafiltration to produce a retentate R1 containing the skim milk fraction enriched in proteins and a permeate P1;
(d) subjecting the permeate P1 of step (c) to nanofiltration to obtain a retentate R2 enriched in lactose and a permeate P2 enriched in minerals;
(e) blending retentate R1 with permeate P2 and the cream fraction (C) to obtain a cheese milk with enriched protein and desired lactose content;
(f) subjecting the cheese milk of step (e) to pasteurization;
(g) adding starter cultures, rennet and optionally electrolytes to said pasteurized cheese milk of step (f) to start coagulation;
(h) subjecting the coagulated mass obtained from step (g) to aftertreatment; and
(i) packaging the aftertreated mass of step (h) to obtain the final product.

The process according to the invention reduces the number of process steps by using lactose standardized cheese milk and by raising the protein content in it to a very high level. In this manner, the volume of milk fed to a cheese vat needed to produce a batch of cheese can be reduced to a quantity equal to the quantity of curd/whey present in the cheese vat prior to transfer to the strainer. This invention skips the need for a pre-drainage process and the use of washing steps

### Separation

A suitable material for the manufacture of the semi-hard cheese according to the invention is raw milk. In the context of the specification "semi-hard" means a cheese that is less hard than for example Parmesan, but harder than for example mozzarella. A semi-hard cheese shows a water content in the fat-free mass of about 50 to 63 wt.-percent and a fat content in the dry mass of about 25 to 55 wt.-percent
(see: https://dairyprocessinghandbook.tetrapak.com/de/chapter/kaese).

Preferably, the raw milk is prior to separation subjected to a process for reducing its content of microorganisms, for example a microfiltration or a bactofugation using a de-germination separator.

In a second step, the milk is pumped into a separator for preparing a skim milk phase and a cream or fat phase. Separation is understood to mean the separation of the cream up-to a fat content of about 40 wt.-percent by weight and the removal of solids. The process can be carried out both in the heat at a temperature in the range of about 20 to about 60 °C or in the cold at a temperature of about 8 to about 18 °C.

In the process according to the invention, it is advantageous to carry out the separation cold. It is advantageous if the temperature of the cold state of the raw milk is adjusted to an optimum value for its separation by heat exchange with a heat transfer medium. Normally, the raw milk is available in a cooled state, the temperature of which does not correspond to the value at which its cold separation can be operated most effectively and most gently for the milk fat (cream). Therefore, it is adjusted to the optimum value for its separation by heat exchange. The resulting exchange cold can be made available to other processes that take place within a dairy, in particular through a so-called heat swing. For example, the temperature of the cooled raw milk is no higher than 6 °C, while the optimum temperature for cold separation is in the range of 8 to 18 °C, and in particular 8 to 12 °C. In this case, heat exchange takes place by heating the raw milk so that the temperature of its cold state is raised to a value within this range. Normally, there is an excess of heat in dairy plants. Therefore, low-temperature water, which is produced in dairy processes, can be used as a heat transfer medium for heating. This low-temperature water is fed into the heat exchange process at a temperature which is, for example, in the range of 35 °C and cools down to a temperature which is, for example, in the range of 11 to 15 °C as a result of the heat exchange. In this way, the process according to the invention provides an important source of cold for processes in dairy operations. In a preferred embodiment, the separation is carried out in the heat, the preferred temperature is in the range of about 35 to about 55 °C.

The separation of solids as well as the skimming of the fat content of about 4 wt.-percent is usually carried out in a downstream component, preferably a separator. Such components are proven technology. In the dairy industry, separators from the company GEA Westfalia Separator GmbH are very common, with which the separation of liquid fat droplets can be carried out individually or together
(http://www.westfalia-separator.com/de/anwendungen/molkereitechnik/milch-molke.html).

### Ultra- and Nanofiltration

The skim milk is transferred into an ultrafiltration unit to produce a first retentate R1, which is contains the proteins, and a first permeate P1 containing lactose and salts. Said permeate P1 is subjected to nanofiltration in order to remove the lactose and to obtain a lactose-depleted Permeate P2, also rich in minerals, and a lactose-rich retentate R2.

Ultra- and nanofiltration are filtration processes from the field of membrane technology with which macromolecular substances and small particles can be separated from a medium and concentrated. Microfiltration, ultrafiltration and nanofiltration are distinguished by the degree of separation. If the exclusion limit (or "cut-off") is 100 nm or above, it is called microfiltration. If the exclusion limit is in the range between 2-100 nm, this is called ultrafiltration. In nanofiltration, the exclusion limit is below 2 nm. The driving force in both separation processes is the differential pressure between the inlet and outlet of the filter surface, which is between 0.1 and 10 bar in ultrafiltration and microfiltration and up to approx. 40 bar in nanofiltration.

The exclusion limits of ultrafiltration membranes are also given in the form of the NMWC (English: Nominal Molecular Weight Cut-Off, also MWCO, Molecular Weight Cut Off, unit: Dalton). It is defined as the minimum molecular mass of globular molecules, 90% of which are retained by the membrane. In practice, the NMWC should be at least 20% lower than the molecular mass of the molecule to be separated. Further qualitative statements about the filtration can be made on the basis of the flux (water value) (transmembrane flux or passage rate). Ideally, this is proportional to the transmembrane pressure and reciprocal to the membrane resistance. These values are determined by the properties of the membrane used as well as by concentrate ion polarisation and any fouling that may occur. The passage rate is related to 1 m2 of membrane surface. Its unit is l/(m2h bar).

For ultrafiltration, membranes have been found to be particularly suitable which have a pore diameter in the range of about 1,000 to about 50,000 and preferably about 5,000 to about 25,000 Daltons. Nanofiltration prefers pore diameters in the range of about 100 to about 2,000 and preferably about 150 to about 1,000 Daltons.

The material of the filter surface - for both ultra- and nanofiltration - can be stainless steel, polymeric materials, ceramics, aluminium oxide or textile fabrics. There are various forms of filter elements: cartridge filters, flat membranes, spiral wound membranes, pocket filters and hollow fibre modules, all of which are fundamentally suitable for the purposes of the present invention. However, spiral wound membranes made of polymer materials or cartridge filters made of ceramics or aluminium oxide are preferably used, whereby the first embodiment has proved to be particularly preferred for ultrafiltration and nanofiltration and the second for microfiltration. The cut-off specifications overlap in the limit range, so that, for example, a membrane with a pore diameter of about 2,000 Daltons can be suitable for both ultrafiltration and nanofiltration.

For the purposes of the present invention, all of the above filtration processes can be carried out independently of one another "hot" or "cold", i.e., in the temperature range from about 10 to about 60 °C. However, it is preferred to operate at temperatures in the high range of about 40 to about 55 °C.

### Cheese milk formation

The skim milk, containing the proteins (R1) is blended with the cream phase (C) and the permeate phase (P2) to produce a mixture, the so-called cheese milk. Preferably, the phases are mixed in a way so that said cheese milk shows.
- a fat content suitable for the desired cheese variety of 5 wt.-percent, preferably from about 3.0 to about 4.5 wt.-percent; and/or
- a protein content of at least 4 wt.-percent, preferably of about 4 to about 5 wt.-percent and/or
- a lactose content of at most 4 wt.-percent, preferably of about 3 to about 4 wt.-percent.

The retentate R2 from nanofiltration contains further amounts of lactose which can be used for other purposes as another valuable product obtained from the process of the invention

### Pasteurization

The cheese milk thus obtained is subjected to pasteurization. This preferably takes place in heat exchangers, whereby plate heat exchangers have proven to be particularly suitable. A temperature gradient is applied to the heat exchangers, which is, however, selected in such a way that the product is heated to a temperature of about 70 to 80 °C and in particular about 72 to 76 °C for a dwell time of at least 15 and at most 60 seconds, preferably about 30 seconds.

### Coagulation

Coagulation is the process where cheese is formed and whey is separated off. The process is started by adding cultures to the cheese milk to form lactic acid and to break down the proteins. Three types of cultures are typically used:
- Mesophilic cultures with an optimum temperature between 25 and 40 °C.
- Thermophilic cultures, which thrive at up to 50 °C.
- Auxiliary cultures. These are used to achieve a specific taste or texture. This is usually due to the action of enzymes produced by these bacteria.

Most commonly, mixed cultures of different strains are used, containing two or more strains of bacteria that complement each other in their effects. Mixed cultures usually consist of a cocktail of either mesophilic or thermophilic bacteria, sometimes both. These cultures not only form lactic acid, but can also produce gas (CO2) and aroma components. Carbon dioxide is essential for the formation of the holes in round-holed cheeses and supports the formation of structure in granular cheeses.

Coagulation of casein is the fundamental process in cheesemaking. It is generally done by adding rennet, but other proteolytic enzymes can be used. The active principle in rennet is chymosin, and coagulation takes place shortly after the rennet is added to the milk. The renneting process operates in several stages; it is customary to distinguish these as follows:
- Transformation of casein to paracasein under the influence of rennet
- Precipitation of paracasein in the presence of calcium ions

The whole process is governed by the temperature, acidity, and calcium content of the milk, as well as other factors. The optimum temperature for rennet is in the region of 40 °C, but lower temperatures of 30 to 35 °C are normally used in practice, principally to enable control of the coagulum's hardness. Rennet is extracted from the stomachs of young calves and marketed in the form of a solution with a strength of 1:10.000 to 1:15.000, which means that one part of rennet can coagulate 10.000 - 15.000 parts of milk in 40 minutes at 35 °C.

A low concentration of Ca ions in the cheese milk causes a soft coagulum. This results in heavy losses of fines (casein) and fat, as well as poor syneresis during cheesemaking. To overcome the disadvantage, for example calcium chloride can be added. Between 5 to 20 g of calcium chloride per 100 kg of milk is sufficient for achieving a constant coagulation time and a firm coagulum. By adding more CaCl₂ the amount of rennet used can be reduced, as the CaCl₂ supports the action of rennet. However, excessive addition of calcium chloride may make the coagulum so hard that it is difficult to cut. For production of low-fat cheese, and if legally permitted, disodium phosphate (Na₂PO₄), usually 10 to 20 g/kg, can sometimes be added to the milk before addition of calcium chloride. This increases the elasticity of the coagulum due to formation of colloidal calcium phosphate, Ca₃(PO₄)₂, which will have almost the same effect as the milk fat globules trapped in the curd.

### Whey removal

The essence of the present invention is that due to the specific amounts of fat, proteins and lactose in the cheese milk a specific pre-drainage of the whey becomes obsolete. Therefore, the process according to the invention is free of any pre-drainage steps for removing the whey and also free of any washing operation. In the traditional cheesemaking a substantial part of the whey, however, are typically removed after the coagulation step, which preferably takes place in a so-called cheese vat. The vat has all required junctions for a controlled and predictable process, including filling of cheese milk, mixing of ingredients, coagulation of milk, cutting of coagulum, blending, whey discharge, water addition, indirect heating and cooling, emptying and CIP (Cleaning in Place). Using warmwater in a dimple jacket to heat the product allows the operator to have more control on the heating speed and temperature. The milk (and in line added starter) is typically fed into the vat through the bottom (or optional top) inlet and gently stirred by the combined stirring and cutting tools. After rennet addition the milk rests to create a firm coagulum to be cut by the sharp knives of the cutting tool. The speed of the tools is controlled between 2 and 10 rpm. When the curd is cut to the required grain size the rotation of the tools is reversed. By rotating the opposite way, the blunt sides of the knives stir the curd and whey mixture to avoid sedimentation. A vat with a tubular whey strainer is also available, A typical vat is the Tetra Pak^{®} Cheese Vat OST SH6. The curd/whey mixture can be indirectly heated by circulating hot water through the dimple jacket. The vat is emptied through the outlet at the bottom. Whey separation is mostly done using a whey sieve, which is lowered from above. Prior to the lowering of the sieve, the curd grains are allowed to settle for some time, in order to minimize the loss of curd fines with the sucked off whey and to avoid plugging of the whey sieve. The whey removal process continues till the desired residual level in the cheese vat has been achieved. Subsequently, the whey sieve will be lifted again. The sieve will then be flushed with a waterjet to remove adherent curd grains and whey.

### Aftertreatment

After cutting, heating, moulding and pressing the mass is subjected to a brining step. For this purpose, the coagulated mass is placed in a salt bath. The cheese is then brined for a length of time desired for that type of cheese. After brining, the cheese can be ripened as nature ripened cheese or foil packaged cheese in purpose-built warehouses

### Products

Another object of the present invention is directed to, but not limited to, a Gouda cheese, a Maasdam Cheese or an Edam cheese obtained according to the process of the invention as explained above.

### Brief description of the drawings

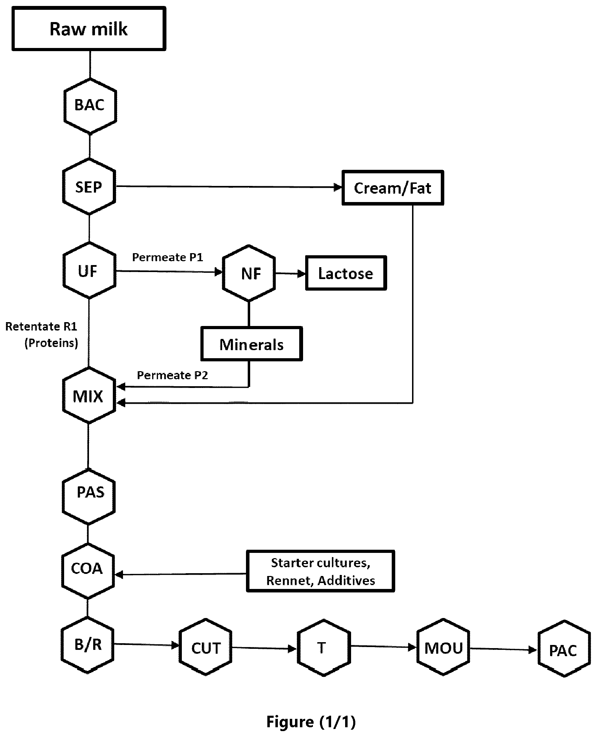

The process according to the present invention is illustrated by **Figure 1****.** The flow sheet provides an example for the invention, without limiting the invention to this specific embodiment.
- BAC: = Bactofugation
- SEP: = Separation
- UF: = Ultrafiltration
- NF: = Nanofiltration
- MIX: = Mixing
- PAS: = Pasteurization
- COA: = Coagulation
- CUT: = Cutting
- T: = Heating
- MOU: = Moulding
- R/B: = Brining/Ripening
- PAC: = Packaging
- CON: = Confectioning

### EXAMPLES

### Example 1

### Gouda 48+ cheese

Double bactofugated milk was skimmed using an Alfa Laval separator, the skimmed milk was treated in an ultrafiltration system using Microdyn Nadir membranes to collect the proteins into the UF retentate. The UF permeate was treated with Suez NF membranes to collect the lactose into the NF retentate. The cream, UF retentate, NF permeate and thermalized whole milk were merged into cheese milk with a fat, protein and lactose content of respectively 4,47%, 4,15% and 3,47%. The cheese milk was pasteurized and at 30.5°C brought into an Ost IV cheese vat, bulk starter culture Bos, calcium chloride and calf rennet are added. After clotting, the coagulum was cut and subsequently heated using the jacket of the cheese vats to 35°C. Then the curd/whey mixture was pumped into the Casomatic buffer tank. From there the curd was transferred in a Casomatic drainage column. The curd mass was portioned and collected in cheese moulds. After positioning of a lid on top of the curd mass in the moulds, transfer to pneumatic presses took place. The curd blocks were pressed for more than one hour before the cheeses were removed from their moulds and put into the brine. The cheeses were ripened for over 6 months in a cellar at 13°C.

### Example 2

### Maasdam 45+ cheese

Fresh milk was skimmed using an Alfa Laval separator, the skimmed milk was treated in an ultrafiltration system using Microdyn Nadir membranes to collect the proteins into the UF retentate. The UF permeate was treated with Suez NF membranes to collect the lactose into the NF retentate. The cream, UF retentate, NF permeate and thermalized whole milk were merged into cheese milk with a fat, protein and lactose content of respectively 3,52%, 4,28% and 3,12%. The cheese milk was pasteurized and at 30,5°C brought into an Ost IV cheese vat. Starter culture Bos, a propionic acid starter culture, a *Lactobacillus bulgaricus* culture, sodium nitrate and calcium chloride and calf rennet were added. After clotting, the coagulum was cut and subsequently heated using the jacket of the cheese vats to 35°C. Then the curd/whey mixture was pumped into the Casomatic buffer tank. From there the curd was pumped in a Casomatic drainage column. The curd mass was portioned and collected in cheese moulds. After positioning of a lid on top of the curd mass in the moulds, transfer to pneumatic presses took place. The curd blocks were pressed for more than one hour before the cheeses were removed from their moulds and put into the brine. The cheeses were ripened for 14 days in a 13°C cellar, 26 days at 20°C and 2 days at 13°C and then cooled to 6°C.

## Claims

1. A process for manufacturing a semi-hard cheese, consisting of or encompassing the following steps:
(a) providing a raw milk;
(b) subjecting said raw milk to a separation process for obtaining a skim milk fraction (SM) and a cream fraction (C);
(c) subjecting the skim milk of step (b) to an ultrafiltration to produce a retentate R1 containing the skim milk fraction enriched in proteins and a permeate P1;
(d) subjecting the permeate P1 of step (c) to nanofiltration to obtain a retentate R2 enriched in lactose and a lactose reduced permeate P2 rich in minerals;
(e) blending retentate R1 with permeate P2 and the cream fraction (C) to obtain a cheese milk with enriched protein and desired lactose content;
(f) subjecting the cheese milk of step (e) to pasteurization;
(g) adding starter cultures, rennet and optionally electrolytes to said pasteurized cheese milk of step (f) to start coagulation;
(h) subjecting the coagulated mass obtained from step (g) to aftertreatment; and
(i) packaging the aftertreated mass of step (h) to obtain the final product.

2. The process of Claim 1, wherein said semi-hard cheese, but not limited to, is a Gouda cheese, a Maasdam cheese or an Edam cheese.

3. The process wherein prior to separation said raw milk is subjected to a process for reducing its content of microorganisms.

4. The process of claim 3, wherein said process for reducing microorganisms is a microfiltration or a bactofugation.

5. The process of Claim 1, wherein said retentate R1, said permeate P2 and said cream fraction (C) are blended so that the resulting cheese milk shows
- a fat content suitable for the desired cheese variety of up to 5 wt.-percent, and/or
- a protein content of at least 4 wt.-percent and/or
- a lactose content of at most 4 wt.-percent.

6. The process of Claim 5, wherein said fat content is adjusted to an amount 3 to 4.5 wt.-percent.

7. The process of Claim 5, wherein said protein content is adjusted to an amount of 4 to 5 wt.-percent.

8. The process of Claim 5, wherein said lactose content is adjusted to an amount of 3 to 4 wt.-percent.

9. The process of Claim 1, wherein coagulation is conducted at a temperature of from about 30 to about 35 °C.

10. The process of Claim 1, wherein said aftertreatment step (h) encompasses at least one of the following procedures:
(i) cutting
(ii) heating
(iii) moulding
(iv) pressing
(v) brining
(vi) ripening
of the coagulated mass of step (g).

11. The process of Claim 1, free of any pre-drainage steps for removing the whey.

12. The process of Claim 1, free of any washing operation.

13. A semi-hard cheese obtained according to the process of Claim 1.

14. The semi-hard-cheese of Claim 13 which can be but not limited to a Gouda cheese, a Maasdam cheese or an Edam cheese.
